# EUROPEAN PATENT APPLICATION

(11) **EP 0 801 899 A2**
(43) Date of publication of application: **22.10.1997**
(21) Application number: 97302590.1
(22) Date of filing: 16.04.1997
(51) Int. Cl.: A21B 3/13

(54) **Bakeware apparatus**

(30) Priority: 20.04.1996 GB 9608253
(71) Applicant: Fluorocarbon Bakeware Systems Limited, Beeston, Nottingham NG9 1PF (GB)
(72) Inventor: Sharp, William Martin, Coleorton, Leicestershire (GB); Jones, Alan Phillip, Welwyn, Hertfordshire AL6 9TS (GB)
(74) Representative: Spoor, Brian

(57) **Abstract**

A bakeware apparatus comprising a framework (22, 30); a plurality of baking pans (11) adapted to be inserted into the framework (22, 30) to form an assembly; and a releasable and re-usable clamping device (23, 31) adapted to releasably secure the pans to the framework to retain the pans in position without deformation of the pans or framework. The clamping device may comprise a pair of L shaped wires (23) snap engaged (25, 26, 27) with the framework to overlie and trap edge flanges (14) of the pans; or a hinged or pinned clamping frame (31) which performs the same function. The pans may be made of non-deformable material and may be coated with PTFE or other non-stick material. The apparatus can be dismantled readily to replace or refurbish the pans, without scrapping the framework and without damage or distortion of the pans.

## Description

This invention relates to bakeware apparatus, and in particular to loaf tins for commercial bakery use.

It is the practice in commercial bakery to use individual loaf tins or pans for baking loaves of bread, the pans being assembled in multiples, for example of four pans, and secured together permanently for ease of automated handling. This grouping of pans using "straps" or rigid frames holds the individual pans in place but, when any damage occurs, the whole assembly must be scrapped or refurbished as a unit. Damage often occurs due to mechanical handling, large temperature and humidity changes in use and thermal and mechanical vibration.

In order to release the finished loaves from the pans, the practice has been either to apply a single-use release agent such as oil or an emulsion to the pan, or (more usually with large pans) to provide a silicone glazed surface on the pans which continues to act as a release agent for the loaves through a substantial number of baking cycles. Additional single-use release agents are often still required. Alternatively, PTFE or other "non-stick" fluoropolymers can be applied. Irrespective of the release system used, the pans build up a deposit of carbon from repeated baking and need cleaning. Eventually silicone glazing or fluoropolymer coating becomes ineffective and needs to be stripped off and re-applied. To carry out this treatment effectively can involve the dismantling of the welded structure to treat the pans.

Attempts have been made, for example in GB-A-1217186, to provide for some releasability of the pans from the welded structure. In GB-A-1217186, each pan has welded to it a part of a supporting structure, the parts being releasably interlocked to form the assembly. However the pans must be of substantial gauge metal to use this type of construction, which makes them expensive to purchase and to heat up during baking. The pans are of different types, depending on their position in the assembly and are therefore not freely exchangeable.

Finally, the assembly must be rigidified by an encircling metal strap, which must be cut through to release the pans from the assembly.

Where pans have been secured in other ways than by welding, these have always involved distortion or damage of the pans, making re-use difficult or unacceptable. Such systems are shown for example in US-A-4645090 and WO-A-95/00022.

It is an object of the invention to provide pans in releasable assemblies, from which the pans can be released without damage or distortion, so that cleaning and/or recoating can be carried out more readily, so that individual damaged pans can be replaced or repaired and so that trends in demand for different types of loaf can more readily be catered for without major re-equipment costs.

According to the invention, there is provided a bakeware apparatus comprising a framework; a plurality of baking pans adapted to be inserted into the framework to form an assembly; and a releasable and re-useable clamping device adapted to releasably secure the pans to the framework to retain the pans in position without deformation of the pans or framework.

Preferably the framework is of stainless steel. Other durable materials, acceptable for food use and capable of withstanding the high temperature and humidity conditions of a baker's oven might alternatively be used.

The pans may have edge flanges and may be received in the framework by resting the edge flanges on supporting portions of the framework.

The framework may comprise an upper endless strap of rectangular shape in plan, and a plurality of corner-pieces. The framework may also comprise an endless lower strap or tray, which may be linked to the upper strap at each corner of the assembly by the corner-pieces. The assembly may also comprise one or more cross-members extending across the assembly between portions of the upper endless strap and/or the lower endless strap or tray.

The clamping device may comprise a wire rigidly secured at its one end to the framework and having a hook formation at its other end adapted to snap engage with a formation of the framework when the wire is taut, the wire being positioned so as to overlie and trap edge flanges of the pans.

Preferably the wire is of generally L-shape and is permanently secured at one comer of the framework, so as each to extend fully along one side of the framework and partly along an adjacent side of the framework to the snap-engageable formation.

It is preferred that two wires are provided, disposed on opposite sides of the framework.

Alternatively, the releasable and re-usable clamping device may comprise a clamping frame having an edge member pivotally secured to the framework the clamping frame being adapted to be releasably secured to the framework by an opposed edge member.

Preferably, both said edge member and said opposed edge member have hinge lugs and a releasable hinge pin, whereby the pivotal securing of the clamping frame to the framework may take place at either of said edge members, the other of said edge members being releasably secured by insertion of said pin.

The pans may be provided with a release coating such as a fluoropolymer coating, which may be PTFE or another fluorocopolymer or a composite coating. Such a coating is long-lived and requires no additional release agents. In some cases, the tins may be discarded when the release coating ceases to be sufficiently effective and will be made of thin gauge sheet metal. However, the invention also allows for stronger, longer lasting pans to be used, which can be removed and recoated, and then replaced in the framework, without destruction of the pans or framework. The choice of pan can be made according to the particular circumstances and pans may be upgraded for example without needing to change the framework.

The materials used for the pans and/or framework, can be selected without the need for them to be deformable, as was usual with conventional bakeware apparatus. So, for example, the pans can be made by various materials and methods of construction including deep drawing, folding or fabrication, not restricted to materials which could be readily deformed for fitment or removal.

Embodiments of the invention will be described in more detail, by way of example only, with reference to the accompanying drawings, in which:-
**FIGURE 1** is a side elevational view of a bakeware apparatus according to the invention;
**FIGURE 2** is a top plan view of part of the apparatus of Figure 1;
**FIGURE 3** is an enlarged scrap sectional view of a portion of the apparatus showing a wire clamping device;
**FIGURE 4** is an enlarged elevational view of the wire clamping device
**FIGURE 5** is an alternative embodiment using a clamping frame.

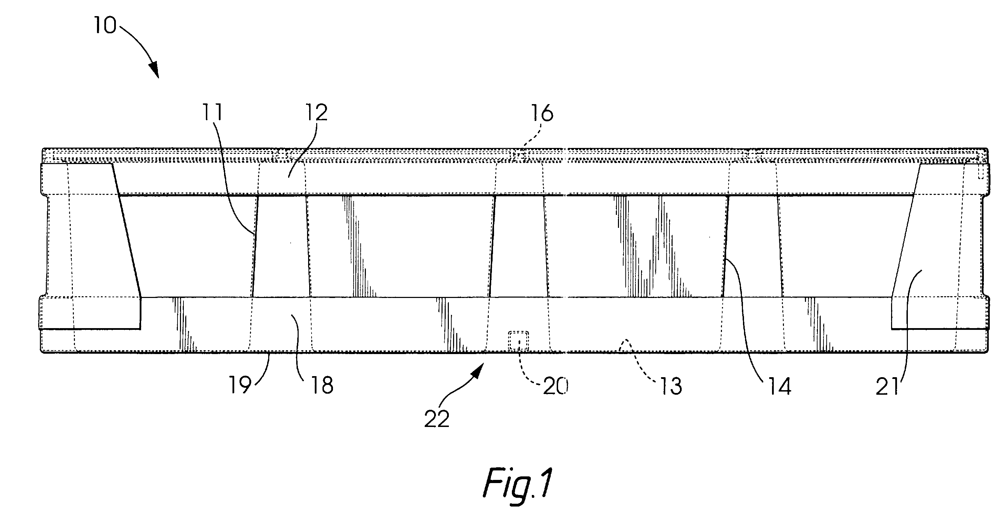

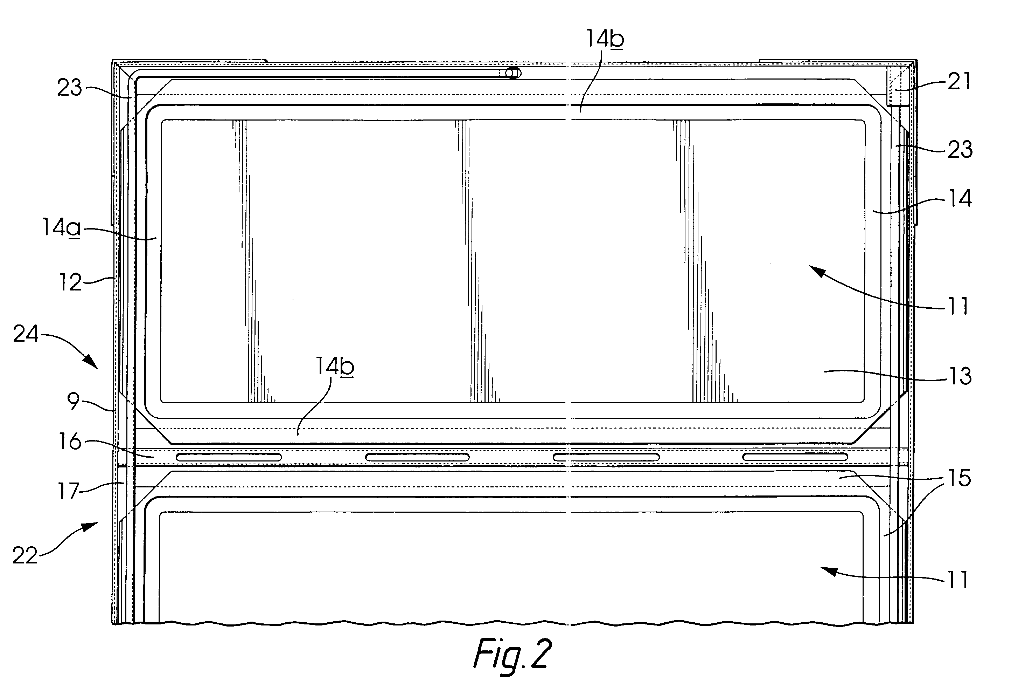

Referring to Figures 1 to 4 of the drawings, a bakeware apparatus is generally indicated at 10 and comprises a plurality of bread baking pans 11, typically four, assembled side by side in a rectangular array and enclosed by an endless stainless steel upper strap 12. Other durable materials, acceptable for food use and capable of withstanding the high-temperature and humidity conditions of a baker's oven might alternatively be used.

The pans 11 are each of generally rectangular shape, having a base 13 and slightly tapering sides 14 to permit the loaf baked inside to be removed easily. The base 13 and sides 14 are made integrally of a single sheet of thin gauge metal and are internally coated with fluoropolymer release material such as PTFE. Usually all the pans will be identical.

Each pan 11 has a projecting edge flange 15 on each of its sides. The flanges 15 may be stiffened by means of an edge wire, or by rolling or folding the material if desired. However, since the flanges 15 are not normally accessible in use, they may have plain cut edges.

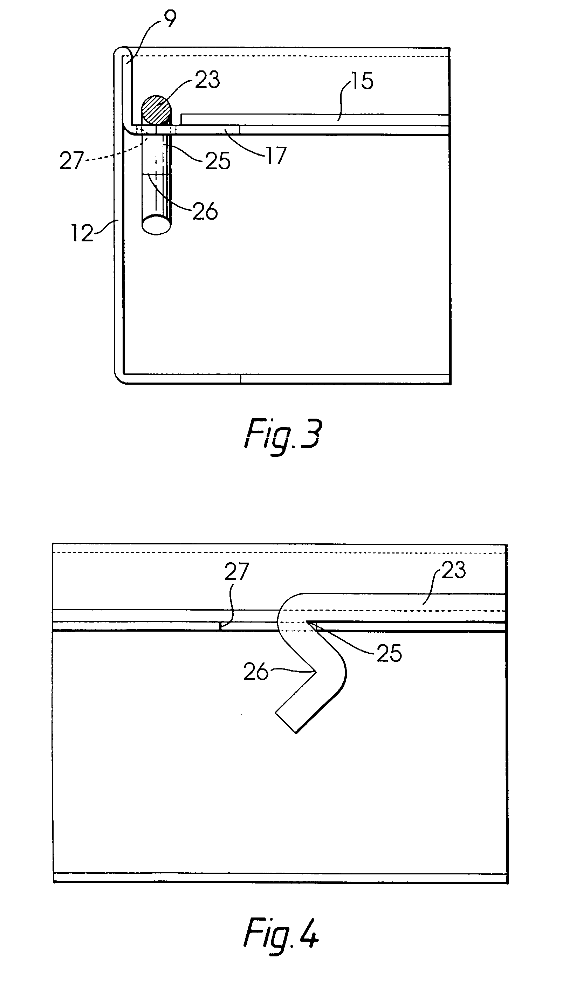

The endless upper strap 12 carries a plurality of perforated cross-members 16, also of stainless steel, fixed to the strap. Each pan 11 is initially supported by resting its flanges 15 on the cross-members 16 and/or on an inwardly-projecting ledge 17 on the upper strap 12, the cross-section of which can best be seen in the enlarged scale Figure 3. The upper strap 12 has a folded upper edge portion 9, leading into the inwardly projecting ledge 17.

The base 13 of each pan 11 is enclosed by a lower strap 18 which supports and protects the pans on the conveyor or shelf of the oven. The pan base 13 is normally in line with the base of the strap 18 or slightly above it so that the load is not taken on the base of the pan. This arrangement allows free circulation of heat from below. In the example shown in Figure 1 to 4, a tray 18 is used and may have a plate-like or a reticulated under face 19, the base 13 resting in full contact with the under face 19. The objective is to ensure that there are no trapped air pockets to give an insulating effect between the base 13 of the pan and the under face 19 of the tray, which could reduce baking efficiency. As an alternative to the lower tray 18,19, a completely open endless lower strap 18 could be provided.

A structural cross-member 20 is provided centrally of the lower strap or tray 18, positioned between the bases 13 of adjacent pans 11 in use.

The upper and lower straps 12, 18 are joined to each other by corner pieces 21, which are intended to protect the corners of the assembly from impact during handling and baking. The corner pieces 21 may be welded or crimped onto the straps 12, 18, so as to be permanently secured together to form a framework, generally referenced at 22. The sides of the framework are open to allow free circulation of heat during baking and efficient cooling of baked loaves so that the pans can be re-used without delay.

As described above, the pans 11 are initially placed into the framework so that the bases 13 rest on the tray 18 and the flanges 15 rest on the ledge 17 of the strap and/or on the cross-members 16. In order to rigidify the assembly, the pans 11 need to be secured to the upper endless strap, which is thereby supported against diagonal distortion. Additionally, of course, the pans 11 are prevented from coming out of the framework. The framework 22 is provided with a clamping wire 23, intended to overlie the flanges 15 of the pans 11 and hold them seated firmly on the ledge 17 so that the bases 13 pass through the strap 18 and the flanges 15.

In the example shown, the framework 22 is rectangular in plan view, the shorter sides 14a of the four baking pans 11 lying along the longer side 24 of the rectangular framework. A generally L-shaped wire 23 of stainless steel is fixed for example by welding or crimping, to the corner piece 21 and the wire 23 is led along the ledge 17 to overlie and trap the flanges 15 of the shorter sides 14*a* of the pans. The shorter limb of the wire 23 has a hook formation best seen in Figure 4, in which the wire is bent down at 25 at an acute angle to its length, preferably of 45° and the free end is then bent forwardly at 26 at a 90° angle. A slot 27 is provided in the ledge 17 at a position such that the hook formation 25, 26 of the wire 23 is snap engageable in the slot when the wire is taut. The wire needs to be sufficiently stiff to prevent it from becoming straightened out at the hook formation. It also needs to be of a low enough coefficient of expansion to retain secure hold of the pans during baking at oven temperatures of approximately 240°C. It has been found that a wire of 3mm diameter stainless steel is effective throughout the baking operation.

The framework is provided with two wires 23, positioned diametrically opposite each other, each clamping down the flanges 15 of the shorter sides 14a of the pans. The longer sides 14b are not clamped down.

In use, the pans 11 can readily be released from the framework 22 by unhooking the hook formations 25, 26 from the slots 27, using a hand tool. This may be necessary for cleaning or replacement of one or more pans of an assembly in the case of damage, or to change the type of loaf being baked. When the pans 11 have lost the non-stick properties of the release coating, or otherwise become non-usable, they can be removed and discarded, or refurbished; and replacements or refurbished pans can be fitted without the need to scrap the framework. This can be re-used through a much longer life-span, particularly due to being made of stainless steel or other durable material.

In some cases, the pans may be discarded when the release coating ceases to be sufficiently effective and these pans will be made of thin gauge sheet metal. However, the invention also allows for stronger, longer lasting pans to be used, which can be removed and recoated, and then replaced in the framework, without destruction of the pans or framework. The choice of pan can be made according to the particular circumstances and pans may be upgraded for example without needing to change the framework.

The materials used for the pans and/or framework, can be selected without the need for them to be deformable, as was usual with conventional bakeware apparatus. So, for example, the pans can be made by various materials and methods of construction including deep drawing, folding or fabrication, not restricted to materials which could be readily deformed for fitment or removal.

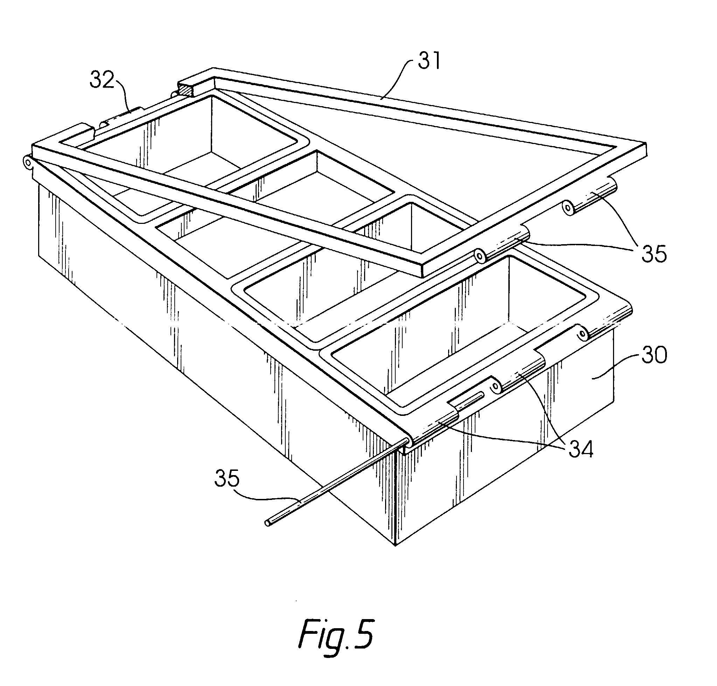

In Figure 5, there is shown an alternative form of framework which can be used to hold pans without deformation during fitting or removal. The framework 30 may be similar in design to the framework 22 of the previously-described embodiment, and the pans can be fitted into the framework in the same way. However, they will be retained by a secondary clamping frame 31, one edge member of which is secured to the frame 30 at one end by means of hinges 32. The other end is releasably secured by pins 33 inserted in tubular lugs 34 and 35 on the framework 30 and clamping frame 31. If desired, the clamping frame 31 could be fitted by pinning at both ends to the framework, so that either of the opposed edge members of the frame can act as the hinge, the other being releasable by withdrawing the hinge pin 33. As shown, the clamping frame 31 is rectangular and overlies only the shorter edge flanges 14*a*, of the pans 11, but it could have cross-members overlying the longer edge flanges 14*b* of the pans 11.

## Claims

1. A bakeware apparatus comprising a framework; a plurality of baking pans adapted to be inserted into the framework to form an assembly; and a releasable and re-usable clamping device adapted to releasably secure the pans to the framework to retain the pans in position without deformation of the pans or framework.

2. Apparatus according to claim 1 wherein the framework is of stainless steel.

3. Apparatus according to claim 1 wherein the framework is of a durable material, acceptable for food use and capable of withstanding the high temperature and humidity conditions of a baker's oven.

4. Apparatus according to any preceding claim wherein the pans have edge flanges and are received in the framework by resting the edge flanges on supporting portions of the framework.

5. Apparatus according to any preceding claim wherein the framework comprises an upper endless strap of rectangular shape in plan, and a plurality of corner-pieces.

6. Apparatus according to claim 5 wherein the framework also comprises an endless lower strap, linked to the upper strap at each corner of the assembly by the corner-pieces.

7. Apparatus according to claim 5 or claim 6 wherein the assembly also comprises one or more cross-members extending across the assembly between portions of the upper endless strap and/or the lower endless strap.

8. Apparatus according to any preceding claim wherein the clamping device comprises a wire rigidly secured at its one end to the framework and having a hook formation at its other end adapted to snap engage with a formation of the framework when the wire is taut, the wire being positioned so as to overlie and trap edge flanges of the pans.

9. Apparatus according to claim 8 wherein the wire is of generally L-shape and is permanently secured at one corner of the framework, so as each to extend fully along one side of the framework and partly along an adjacent side of the framework to the snap-engageable formation.

10. Apparatus according to claim 9 wherein two wires are provided, disposed on opposite sides of the framework.

11. Apparatus according to any one of claims 1 to 7 wherein the releasable and re-usable clamping device comprises a clamping frame having an edge member pivotally secured to the framework, the clamping frame being adapted to be releasably secured to the framework by an opposed edge member.

12. Apparatus according to claim 11 wherein both said edge member and said opposed edge member have hinge lugs and a releasable hinge pin whereby the pivotal securing of the clamping frame to the framework may take place at either of said edge members, the other of said edge members being releasably secured by insertion of said pin.

13. Apparatus according to any preceding claim wherein the pans are provided with a release coating.

14. Apparatus according to claim 13 wherein the release coating comprises a fluoropolymer coating.

15. Apparatus according to claim 14 wherein the fluoropolymer coating comprises PTFE.

16. Apparatus according to claim 15 wherein the fluoropolymer coating comprises a fluorocopolymer.

17. Apparatus according to any preceding claim wherein the pans are made using materials which cannot be readily deformed.
